# EUROPEAN PATENT SPECIFICATION

(11) **EP 2 482 648 B1**
(45) Date of publication and mention of the grant of the patent: **01.05.2019**
(21) Application number: 09778781.6
(22) Date of filing: 30.09.2009
(51) Int. Cl.: A01N 37/02, A01N 37/06, A01N 59/20

(54) **OIL BORNE WOOD PRESERVING COMPOSITION FOR TREATMENT OF POLES, POSTS, PILING, CROSS-TIES AND OTHER WOODED STRUCTURES COMPRISING FATTY ACID AND BIVALENT COPPER**
HOLZKONSERVIERUNGSZUSAMMENSETZUNG AUF ÖLBASIS ZUR BEHANDLUNG VON LATTEN, MASTEN, PFÄHLEN, VERSTREBUNGEN UND ANDEREN HOLZSTRUKTUREN
COMPOSITION DE CONSERVATION DE BOIS À BASE D'HUILE POUR LE TRAITEMENT DE POTEAUX, DE MONTANTS, DE PIEUX, DE TRAVERSES ET D'AUTRES STRUCTURES EN BOIS

(43) Date of publication of application: 08.08.2012
(73) Proprietor: Koppers Performance Chemicals Inc., Pittsburgh, PA 15219 (US)
(72) Inventor: MARX, Hans-Norbert, 77815 Bühl-Vimbuch (DE)
(74) Representative: Kador & Partner PartG mbB
(86) International application number: PCT/EP2009/007026
(87) International publication number: WO 2011/038747

(56) References cited:
- WO-A1-93/02557
- US-A- 4 001 400
- US-A- 4 177 288

## Description

### FIELD OF INVENTION

This invention relates to wood preserving compositions for the treatment of wood products, such as utility poles, pilings, posts, and railroad ties and other wooden structures.

### BACKGROUND OF INVENTION

Wood and/or cellulose based products exposed in an outdoor environment are biodegradable, primarily through attack by microorganisms. As a result, they will decay, weaken in strength, and discolor. The microorganisms causing wood deterioration include brown rots such as Postia placenta, Gloeophyllum trabeum and Coniophora puteana, white rots such as Irpex lacteus and Trametes versicolor, dry rots such as Serpula lacrymans and Meruliporia incrassata and soft rots such as Cephalosporium, Acremonium, and Chaetomium. In addition, wood is subject to attack by wood-inhabiting insects, such as termites, beetles, ants, bees, wasps, wood borers and so on. As a result, the use of wood exposed to permanent contact with soil, water or weathering requires an effective and durable protection against wood destroying organisms, such as fungi, insects, etc. Wood preservatives are well known for preserving wood and extend the service life of wood products including decking boards, fence posts, utility poles, railroad ties, permanent wood foundation, and other cellulose-based materials, such as paper, plywood, particleboard, textiles, rope, etc., against organisms responsible for the deterioration of wood. Examples of such uses are in particular: railway sleepers, utility poles, pilings in coastal areas, vegetable and vine supporting poles and stakes, avalanche constructions, garden and landscape constructions and numerous other similar end uses.

Historically, oilborne and waterborne preservatives have been used for treating poles, posts, pilings, railway sleepers and other wooden structures to protect wood from decay and insect attack. The following known wood preservative systems have been used: copper salts dissolved in fatty acids, i.e., copper soaps, copper-chrome salts and oxides (cc salts / cc oxides), copper organic combinations, e.g., Cu-HDO, Cu azole, Cu Quat, tar oil (creosote), and pentachlorphenol (PCP) in hydrocarbon solvents.

However, each of these preservatives has some major disadvantages. Copper soaps, e.g. Cu-octoate, Cu-naphthenate and the like have insufficient efficacy against copper tolerant fungi, *e.g., Poria sp*. Chromium based wood preservatives have non-acceptable toxicological and eco-toxicological profiles. To produce stable copper organic formulations, such as Cu-HDO, Cu-Azole, and Cu Quat, large amount of ammonia or organic amines, such as monoethanolamine, are required. Use of ammonia results in undesirable odor. Use of amines increase the leaching of copper from wood in service and increases the corrosivity of treated wood. Tar oil (creosote) contains a high amount of polycyclic aromatic hydrocarbons (PAHs), which have critical toxicological profiles. Pentachlorophenol (PCP) products contain high amounts of co-formulants *e.g*., 10-15%, which affects the toxicological profile of the product and may lead to unacceptable health effects. Even without CO-formulants, PCP itself has an unacceptable toxicological profile for some applications.

In addition, the use of chromium, tar oil, and PCP for wood preservation is currently under heavy scrutiny by the regulatory agencies both in Europe and the rest of the world. As a result, there is an unmet need to develop an environmentally compatible wood preservative composition with acceptable health and environmental properties without renouncing the necessary efficacy against the wood destroying organisms. This need is solved by the subject matter disclosed herein.

### SUMMARY OF THE INVENTION

In one embodiment, the present is a wood preserving composition according to present claim 1, comprising copper ion, a fatty acid, an organic co-biocide and an oil. The composition has good stability, low toxicity to animal and plant life and high biocidal activity against wood decay fungi and termites.
In some embodiments, the composition is essentially free of one or more of inorganic or organic amines, water, or solvents containing hydrocarbons.

In one embodiment, the fatty acid comprises 0.01 - 30 wt % of the composition. In one embodiment, the copper compound comprises 0.01 - 30 wt % of the composition. In one embodiment, the organic co-biocide comprises 0.001 - 30 wt % of the composition. In one embodiment, the combined weight ratio of the fatty acid / oil in the composition varies from 70% to 95% by weight.

The fatty acid compound is selected from the group consisting of palmitic fatty acid, arachidic fatty acid, linoleic fatty acid, oleic fatty acid, and stearic fatty acid.

The bivalent copper is selected from the group consisting of cupric oxide and copper hydroxide.

The organic co-biocide is selected from the group consisting of triazole, quaternary ammonium compound, borate compound, and fluoride compound. In a preferred embodiment, the organic co-biocide is selected from the group consisting of didecyldimethylammonium chloride, didecyldimethylammonium carbonate, didecyldimethylammonium bicarbonate, alkyldimethylbenzylammonium chloride, N,N-didecyl-N-methyl-poly(oxyethyl)ammonium propionate, tebuconazole, cyproconazole, propiconazole and triadimefon. In another embodiment, the composition comprises more than one organic co-biocide

The oil is selected from the group consisting of lard, butter, hemp oil, canola oil, sunflower oil, olive oil, corn oil, palm oil, coconut oil, pine oil, cottonseed oil, wheat germ oil, soya oil, safflower oil, linseed oil, tung oil, castor oil, soybean oil, peanut oil, rapeseed oil, sesame seed oil, rice germ oil, fish oil, whale oil and tall oil, aliphatic
petroleum distillates, aromatic kerosene extracts, and mineral oil.

In one embodiment, the composition further contains additives selected from the group consisting of antioxidants, colorants, hydrophobants, emulsifiers, UV absorbers, migration aids, and tracers.

The present invention also provides a method for producing a wood preservative comprising steps of combining a copper compound and a fatty acid according to present claim 1 and an oil; heating the combination until a portion of the copper compound is dissolved; and adding an organic co-biocide according to present claim 1 to the combination. In another embodiment, the present invention provides a method for producing a wood preservative comprising steps of combining a copper compound and a fatty acid according to claim 1 and an oil; dissolving the copper compound in the combination; and adding an organic co-biocide according to claim 1 to the combination.

The present invention also provides a method for treating wood comprising contacting the composition of present claim 1 to wood, thereby rendering the wood resistant to one or more wood decay fungi, insects, or marine borers. In one embodiment, the contacting step is pressure or vacuum treatment. In one embodiment, the composition is diluted with oil prior to the contacting step. In another embodiment, the composition is diluted with one or more hydrocarbon solvents prior to the contacting step.

The present invention also provides wood resistant to wood decay fungi, insects and marine borers, comprising the composition of present claim 1. In one embodiment, the wood is essentially free of inorganic or organic amines.

### DETAILED DESCRIPTION OF THE INVENTION

Disclosed herein is a wood preserving composition, a method for making the composition, and a method for use thereof in treatment of wooden products, more particularly utility poles, pilings, railroad ties, wooden bridges, railway sleeper. Also disclosed herein is wood that is resistant to wood decay fungi, insects and marine borers. The composition comprises bivalent copper, a fatty acid, an organic co-biocide, and an oil.

The compositions of the present invention have a broad spectrum of bio-efficacy against wood decay fungi, including, brown rot fungi, white rot fungi, and soft rot fungi. Non-limiting examples of brown rot fungi include: Coniophora puteana, Serpula lacrymans, Antrodia vaillantii, Gloeophyllum trabeum, Gleoeophyllum sepiarium, Lentinum lepideus, Oligoporus placenta, Meruliporia incrassate, Daedalea quercina, Postia placenta. Non-limiting examples of white rot fungi include: Trametes versicolor, Phanerochaete chrysosporium, Pleurotus ostreatus, Schizophyllum commune, Irpex lacteus. Some non-limited examples of white rot fungi are Chaetomium globosum, Lecythophora hoffmannii, Monodictys putredinis, Humicola alopallonella, Cephalosporium, Acremonium, and Chaetomium.

The compositions of the present invention are also effective against a broad range of insects and marine borers, including termites, beetles, and wood-boring insects. Non-limiting examples of termites include drywood termites such as Cryptotermes and Kaloterms, and dampwood termites such as Zootermopsis, subterranean termites such as Coptotermes, Mastotermes, Reticulitermes, Schedorhinotermes, Microcerotermes, Microtermes, and Nasutitermes. Non-limiting examples of beetles include those in families such as, for example, Anoniidae, Bostrychidae, Cerambycidae, Scolytidae, Curculionidae, Lymexylonidae, and Buprestidae.

The present invention includes bivalent copper selected from the group consisting of cupric hydroxide and copper hydroxide.

The weight ratio of the ionized copper, for example the bivalent copper, varies from about 0.01% to about 30% by weight. As used herein, "ionized copper" refers to copper in the form of either cuprous or cupric ions, either monovalent or bivalent copper. In several embodiments, the weight ratio of the ionized copper in the composition varies from 0.01% to 30% by weight, 0.01% to 25% by weight, 0.01% to 20% by weight, 0.01% to 15% by weight, 0.01% to 10% by weight, 0.01% to 5% by weight, and 0.01% to 1% by weight. In other embodiments, the weight ratio of the ionized copper in the composition varies from 0.05% to 30% by weight, 1% to 30% by weight, 5% to 30% by weight, 10% to 30% by weight, 15% to 30% by weight, 20% to 30% by weight, and 25% to 30% by weight.

The preferred range of weight ratio of the ionized copper in the composition varies from about 0.1% to about 20% by weight. In several embodiments, the weight ratio of ionized copper in the composition varies from 0.1% to 20% by weight, 0.1% to 15% by weight, 0.1% to 10% by weight, 0.1% to 5% by weight, and 0.1% to 1% by weight. In other embodiments, the weight ratio of ionized copper in the composition varies from 0.5% to 20% by weight, 1% to 20% by weight, 5% to 20% by weight, 10% to 20% by weight, and 15% to 20% by weight.

The most preferred range of weight ratio of ionized copper in the composition varies from about 1% to about 10 % by weight. In several embodiments, the weight ratio of ionized copper in the composition varies from 1% to 10% by weight, 1% to 9% by weight, 1% to 8% by weight, 1% to 7% by weight, 1% to 6% by weight, 1% to 5% by weight, 1% to 4% by weight, 1% to 3% by weight, 1% to 2% by weight, and 1% to 1.5% by weight. In other embodiments, the weight ratio of ionized copper in the composition varies from 2% to 10% by weight, 3% to 10% by weight, 4% to 10% by weight, 5% to 10% by weight, 6% to 10% by weight, 7% to 10% by weight, 8% to 10% by weight, and 9% to 10% by weight.

The present invention also includes a fatty acid according to present claim 1. The fatty acid can dissolve and/or complex ionized copper in an oil. In one embodiment, fatty acids may be produced by the hydrolysis of ester linkages in a fat or biological oil, with the removal of glycerol. In another embodiment of the present invention, the fatty acid is not produced by hydrolysis of the oil used in the composition. The fatty acids can be derived from either animal fats or vegetable fats, such as, lard, butter, hemp oil, rapseed oil, canola oil, sunflower oil, olive oil, corn oil, palm oil, coconut oil, pine oil, cottonseed oil, wheat germ oil, soya oil, safflower oil, linseed oil, tung oil, castor oil, soybean oil, peanut oil, rapeseed oil, sesame seed oil, rice germ oil, fish oil, whale oil and tall oil.

The weight ratio of the fatty acid in the composition varies from about 0.01% to about 30% by weight. In several embodiments, the weight ratio of the fatty acid in the composition varies from 0.01% to 30% by weight, 0.01% to 25% by weight, 0.01% to 20% by weight, 0.01% to 15% by weight, 0.01% to 10% by weight, 0.01% to 5% by weight, and 0.01% to 1% by weight. In other embodiments, the weight ratio of the fatty acid in the composition varies from 0.05% to 30% by weight, 1% to 30% by weight, 5% to 30% by weight, 10% to 30% by weight, 15% to 30% by weight, 20% to 30% by weight, and 25% to 30% by weight.

The preferred range of weight ratio of the fatty acid in the composition varies from about 0.1% to about 20% by weight. In several embodiments, the weight ratio of the fatty acid in the composition varies from 0.1% to 20% by weight, 0.1% to 15% by weight, 0.1% to 10% by weight, 0.1% to 5% by weight, and 0.1% to 1% by weight. In other embodiments, the weight ratio of the fatty acid in the composition varies from 0.5% to 20% by weight, 1% to 20% by weight, 5% to 20% by weight, 10% to 20% by weight, and 15% to 20% by weight.

The most preferred range of weight ratio of the fatty acid in the composition varies from 1 to 10 % by weight. In several embodiments, the weight ratio of the fatty acid in the composition varies from 1% to 10% by weight, 1% to 9% by weight, 1% to 8% by weight, 1% to 7% by weight, 1% to 6% by weight, 1% to 5% by weight, 1% to 4% by weight, 1% to 3% by weight, 1% to 2% by weight, and 1% to 1.5% by weight. In other embodiments, the weight ratio of the fatty acid in the composition varies from 2% to 10% by weight, 3% to 10% by weight, 4% to 10% by weight, 5% to 10% by weight, 6% to 10% by weight, 7% to 10% by weight, 8% to 10% by weight, and 9% to 10% by weight.

The present invention also includes an organic cobiocide according to claim 1.

The weight ratio of the organic biocide in the composition varies from about 0.001% to about 30% by weight. In several embodiments, the weight ratio of the organic biocide in the composition varies from 0.001% to 30% by weight, 0.001% to 25% by weight, 0.001% to 20% by weight, 0.001% to 15% by weight, 0.001% to 10% by weight, 0.001% to 5% by weight, and 0.001% to 1% by weight. In other embodiments, the weight ratio of the organic biocide in the composition varies from 0.005% to 30% by weight, 0.01% to 30% by weight, 0.05% to 30% by weight, 1% to 30% by weight, 5% to 30% by weight, 10% to 30% by weight, 15% to 30% by weight, 20% to 30% by weight, and 25% to 30% by weight

The preferred range of the weight ratio of the organic biocide in the composition varies from about 0.005% to about 10% by weight. In several embodiments, the weight ratio of the organic biocide in the composition varies from 0.005% to 10% by weight, 0.005% to 9% by weight, 0.005% to 8% by weight, 0.005% to 7% by weight, 0.005% to 6% by weight, 0.005% to 5% by weight, 0.005% to 4% by weight, 0.005% to 3% by weight, 0.005% to 2% by weight, 0.005% to 1% by weight, and 0.005% to 0.5% by weight. In other embodiments, the weight ratio of the organic biocide in the composition varies from 0.005% to 10% by weight, 0.05% to 10% by weight, 0.5% to 10% by weight, 1% to 10% by weight, 2% to 10% by weight, 3% to 10% by weight, 4% to 10% by weight, 5% to 10% by weight, 6% to 10% by weight, 7% to 10% by weight, 8% to 10% by weight, and 9% to 10% by weight.

The most preferred range of the weight ratio of the organic biocide in the composition varies from about 0.01% to about 5% by weight. In several embodiments, the weight ratio of the organic biocide in the composition varies from 0.01% to 5% by weight, 0.01% to 4% by weight, 0.01% to 3% by weight, 0.01 % to 2% by weight, 0.01% to 1% by weight, 0.01% to 0.5% by weight, and 0.01% to 0.1% by weight. In several embodiments, the weight ratio of the organic biocide in the composition varies from 0.05% to 5% by weight, 0.1% to 5% by weight, 1% to 5% by weight, 2% to 5% by weight, 3% to 5% by weight, and 4% to 5% by weight.

Non-limiting examples of quaternary ammonium compounds are: didecyldimethylammonium chloride; didecyldimethylammonium carbonate bicarbonate; alkyldimethylbenzylammonium chloride; alkyldimethylbenzylammonium carbonate bicarbonate; didodecyldimethylammonium chloride; didodecyldimethylammonium carbonate bicarbonate; didodecyldimethylammonium propionate; N,N-didecyl-N-methyl-poly(oxyethyl)ammonium propionate.

Non-limiting examples of triazole compounds are 1-[[2-(2,4-dichlorophenyl)-1,3-dioxolan-2-yl]methyl]-1H-1-2,4-triazole (azaconazole), 1-[(2RS,4RS:2RS,4SR)-4-bromo-2-(2,4-dichlorophenyl)tetrahydrofurfuryl]-1H-1,2,4-triazole (bromuconazole), (2RS,3RS;2RS,3SR)-2-(4-chlorophenyl)-3-cycopropyl-1-(1H-1,2,4-triazol-1-yl)butan-2-ol (Cyproconazole), (2RS,3RS)-1-(2,4-dichlorophenyl)-4,4-dimethyl-2-(1H-1,2,4-triazol-1-yl)pentan-3-ol (diclobutrazol), cis-trans-3-chloro-4-[4-methyl-2-(1H-1,2,4-triazol-1-ylmethyl)-1,3-dioxolan-2-yl]phenyl 4-chlorophenyl ether (difenoconazole), (E)-(RS)-1-(2,4-dichlorophenyl)-4,4-dimethyl-2-(1H-1,2,4-triazol-1-yl)pent-1-en-3-ol (diniconazole), (E)-(R)-1-(2,4-dichlorophenyl)-4,4-dimethyl-2-(1H-1,2,4-triazol-1-yl)pent-1-en-3-ol (diniconazole-M), (2RS,3SR)-1-[3-(2-chlorophenyl)-2,3-epoxy-2-(4-fluorophenyl)propyl]-1H-1,2,4-triazole (epoxiconazole), (RS)-1-[2-(2,4-dichlorophenyl)-4-ethyl-1,3-dioxolan-2-ylmethyl]-1H-1,2,4-triazole (etaconazole), (RS)-4-(4-chlorophenyl)-2-phenyl-2-(1H-1,2,4-triazol-1-ylmethyl)butyronitrile (fenbuconazole), 3-(2,4-dichloropheny 1)-6-fluoro-2-(1H-1,2,4-triazol-1-yl)quinazolin-4(3H)-one (fluquinconazole), bis(4-fluorophenyl)(methyl)(1H-1,2,4-triazol-1-ylmethyl)silane (flusilazole), (RS)-2,4'-difluoro-α-(1H-1,2,4-triazol-1-ylmethyl)benzhydryl alcohol (flutriafol), (2RS,5RS;2RS,5SR)-5-(2,4-dichlorophenyl)tetrahydro-5-(1H-1,2,4-triazol-1-ylmethyl)-2-furyl 2,2,2-trifluoroethyl ether (furconazole), (2RS,5RS)-5-(2,4-dichlorophenyl)tetrahydro-5-(1H-1,2,4-triazol-1-ylmethyl)-2-furyl 2,2,2-trifluoroethyl ether(furconazole-cis), (RS)-2-(2,4-dichloropheny1)-1-(1H-1,2,4-triazol-1-yl)hexan-2-ol (hexaconazole), 4-chlorobenzyl (EZ)-N-(2,4-dichlorophenyl)-2-(1H-1,2,4-triazol-1-yl)thioacetamidate (imibenconazole), (1RS,2SR,5RS;1RS,2SR,5SR)-2-(4-chlorobenzyl)-5-isopropyl-1-(1H-1,2,4-triazol-1-ylmethyl)cyclopentanol (ipconazole), (1RS,5RS;1RS,5SR)-5-(4-chlorobenzyl)-2,2-dimethyl-1-(1H-1,2,4-triazol-1-ylmethyl)cyclopentanol (metconazole), (RS)-2-(4-chlorophenyl)-2-(1H-1,2,4-triazol-1-ylmethyl)hexanenitrile (myclobutanil), (RS)-1-(2,4-dichloro-β-propylphenethyl)-1H-1,2,4-triazole(penconazole), cis-trans-1-[2-(2,4-dichlorophenyl)-4-propyl-1,3-dioxolan-2-ylmethyl]-1H-1,2,4-triazole (propiconazole), (RS)-2-[2-(1-chlorocyclopropyl)-3-(2-chlorophenyl)-2-hydroxypropyl]-2,4-dihydro-1,2,4-triazole-3-thione (prothioconazole), 3-(2,4-dichlorophenyl)-2-(1H-1,2,4-triazol-1-yl)-quinazolin-4(3H)-one (quinconazole), (RS)-2-(4-fluorophenyl)-1-(1H-1,2,4-triazol-1-yl)-3-(trimethylsilyl)propan-2-ol (simeconazole), (RS)-1-p-chlorophenyl-4,4-dimethyl-3-(1H-1,2,4-triazol-1-ylmethyl)pentan-3-ol (tebuconazole), propiconazole, (RS)-2-(2,4-dichloropheny1)-3-(1H-1,2,4-triazol-1-yl)propyl 1,1,2,2-tetrafluoroethyl ether (tetraconazole), (RS)-1-(4-chlorophenoxy)-3,3-dimethyl-1-(1H-1,2,4-triazol-1-yl)butan-2-one (triadimefon), (1RS,2RS;1RS,2SR)-1-(4-chlorophenoxy)-3,3-dimethyl-1-(1H-1,2,4-triazol-1-yl)butan-2-ol (triadimenol), (RS)-(E)-5-(4-chlorobenzylidene)-2,2-dimethyl-1-(1H-1,2,4-triazol-1-ylmethyl)cyclopentanol (triticonazole), (E)-(RS)-1-(4-chlorophenyl)-4,4-dimethyl-2-(1H-1,2,4-triazol-1-yl)pent-1-en-3-01 (uniconazole), (E)-(S)-1-(4-chlorophenyl)-4,4-dimethyl-2-(1H-1,2,4-triazol-1-yl)pent-1-en-3-ol (uniconazole-P), and 2-(2,4-difluorophenyl)-1-(1H-1,2,4-triazole-1-yl)-3-trimethylsilyl-2-propanol. Other azole compounds include: amisulbrom, bitertanol, fluotrimazole, triazbutil, climbazole, clotrimazole, imazalil, oxpoconazole, prochloraz, triflumizole, azaconazole, simeconazole, and hexaconazole.

The preferred organic cobiocides are tebuconazole, cyproconazole, propiconazole, and triadimefon.

The present invention also includes an oil. As used herein, "oil" is a hydrophobic, nonpolar substance that is soluble in organic solvents. In some embodiments, the oil is liquid at ambient temperatures. In other embodiments, the oil is liquid at elevated temperatures. In one embodiment, the oil functions as a carrier. As used herein, "carrier" refers to a medium for the other components of the composition. In one embodiment, the oil carrier is in excess of any other components of the composition of the present invention.

The oils include lard, butter, hemp oil, rapseed oil, canola oil, sunflower oil, olive oil, corn oil, palm oil, coconut oil, pine oil, cottonseed oil, wheat germ oil, soya oil, safflower oil, linseed oil, tung oil, castor oil, soybean oil, peanut oil, rapeseed oil, sesame seed oil, rice germ oil, fish oil, whale oil and tall oil. The oils of petroleum origin
such as aliphatic petroleum distillates, aromatic kerosene extracts and mineral oil can also be used.

In one embodiment, the composition of the present invention can be prepared by mixing and agitating a copper compound and fatty acid in an oil or oil carrier and heating the mixture
during agitation until the copper compound is dissolved. The heating temperature can vary from 30°C to 120°C depending upon the copper and fatty acid used. For example, when copper hydroxide and fatty acid derived from linseed oil are mixed into linseed oil, the heating temperature can be maintained at 40°C to 60°C for copper to dissolve. Once the copper is dissolved and the solution is cooled, the organic CO-biocide is added.

In one embodiment, the fatty acid of the composition is derived from an oil of the same identity as the oil selected for the composition.

Non-limiting tall oil fatty acids (TOFAs) suitable for use with the composition of the present invention are given below. Arizona Chemical, whose global headquarters are in Jacksonville, Florida produces SYLFATB® 2, a tall oil fatty acid (TOFA) with a high fatty acid content a low content of rosin acids and unsaponifiables. SYLFATB® 2 has a partially unsaturated C18 backbone. Forchem of Rauma Finland (website www.fchem.com) produces a TOFA known as "for2." The superior chemical reactivy of for2 is due to its long carbon chain (C18), the acid function of the carboxyl group (-COOH) and the unsaturation of the double bonds.

In one embodiment, the combined weight ratio of the fatty acid plus oil in the composition varies from about 70% to about 95% by weight. In several embodiments, the combined weight ratio of the fatty acid plus oil in the composition varies from 70% to 95% by weight, 70% to 90% by weight, 70% to 85% by weight, and 70% to 80% by weight. In other embodiments, the combined weight ratio of the fatty acid plus oil in the composition varies from 75% to 95% by weight, 80% to 95% by weight, 85% to 95% by weight, and 90% to 95% by weight.

In a preferred embodiment, the combined weight ratio of the fatty acid plus oil in the composition varies from about 80% to 90% by weight. In several embodiments, the combined
weight ratio of the fatty acid plus oil in the composition varies from 80% to 90% by weight, 80% to 85% by weight, and 85% to 90% by weight.

In one embodiment, the composition of the present invention is prepared as a concentrate which may be diluted at a later time if desired, depending on the particular application. In another embodiment, the composition of the present invention is used directly as a treating solution without further dilution. For example, in one embodiment, the composition can be used in undiluted form as a replacement for creosote for pressure treatment of railway sleepers, utility poles, and the like. In another embodiment, the composition can be used in undiluted form for professional or commercial surface treatment of timber by painting, dipping, submersion, or other application methods known in the art. In another embodiment, the composition can be used in undiluted form for professional remedial treatment of wood in service, for example on noise barriers, support poles in soil/air contact, and the like. In another embodiment, the composition can be used in undiluted form for treatment of boreholes, for preventive and/or curative injection into wood structures such as wooden bridges, playground equipment and the like. In another embodiment, composition can be used in undiluted form for treatment of stakes for fruit and vegetables, stakes for nurseries, and the like.

In other embodiments, the composition of the present invention is diluted with one or more hydrocarbon solvents (as opposed to a natural oil, for example a tall oil, extracted and refined from a vegetable source) for double vacuum treatment of timber for all end uses, preferably with recovery of the hydrocarbon solvent In another embodiment, the composition of the present invention is diluted with oil prior to application.

In another embodiment, the composition of the present invention is used as the active component in cartridges, bandages, or pads and the like for selective zone protection of "threatened" timber. In another embodiment, the composition of the present invention is used as an additive in the manufacturing of engineered panels such as chipboards, MDF boards, "OSB boards," plywood and the like. In other embodiments, the composition of the present invention can be used in combination with other preservatives.

In one embodiment, the composition of the present invention is applied to wood through vacuum and/or pressure directly. In another embodiment, the composition of the present invention is diluted with oil before application to wood through vacuum and/or pressure cycle.

The composition of the present invention has comprehensive efficacy against wood destroying organisms, including the fungi, e.g., Poria, Antrodia, and the like, which exhibit pronounced copper tolerance. The composition of the present invention is effective against a range of wood destroying organisms, for example, Basidiomycetes, white and brown rot, Ascomycetes, fungi imperfecti, soft rot, wood destroying insects, including termites, wood discolouring fungi, blue stain, and mold. In one embodiment, the composition of the present invention further comprises a quat. Such an embodiment exhibits a broad efficacy spectrum because the quat is effective on organisms that are resistant to copper, e.g., Poria, Antrodia, while the copper is effective on organisms resistant to the quat, e.g., Coniophora. In one embodiment, the efficacy spectrum of the composition of the present invention can be enhanced by the addition of further active components. In one embodiment, organic insecticides such as Etofenprox, Permethrin, and/or Clothianidin are included. In another embodiment, organic fungicides such as Azoles, e.g. Propiconazole, Tebuconazole, and the like, IPBC, and/or Sorbic Acid are included.

In one embodiment, the composition of the present invention is essentially free of inorganic or organic amines, a significant ecological and economical advantage. As used herein, "essentially free of means less than 1% by weight. In one embodiment, the composition comprises less than 10% by weight of inorganic or organic amines. In another embodiment, the composition comprises less than 5% by weight of inorganic or organic amines. In another embodiment, the composition has zero inorganic or organic amines.

The composition of the present invention exhibits significantly better fixation (less leachability) when applied then the prior art copper organics.

In one embodiment, the composition of the present invention is essentially free of water or hydrocarbon solvents, rendering it suitable as a substitute for creosote. In another embodiment, the composition has zero water. In one embodiment, the composition comprises less than 10% by weight of hydrocarbon solvents. In another embodiment, the composition comprises less than 5% by weight of hydrocarbon solvents. In another embodiment, the composition has zero hydrocarbon solvents.

In one embodiment, the composition of the present invention further comprises additives in order to modify one or more material properties of the composition. For example, antioxidants for stability, colorants for decorative effect, hydrophobation for weathering properties, emulsifiers for miscibility with water, UV absorbers for light fastness / yellowness, migration aids to improve diffusion, and/or tracers to trace product origin.

The composition of the present invention is characterised by good penetration and distribution in timber, and strong fixation (i.e., resistance to leaching) without the need for fixation components such as chromium or a complexing agent like monoethanolamine. In contrast to creosote, specific or undesired odors are neither emitted from the preservative systems nor from the treated wood. The toxicological profile is unremarkable and acceptable, particularly when compared to PCP, chrome based preservatives, and creosote.

In one embodiment, the composition comprises a cationic surfactant, for example, a quaternary ammonium cation (quat). Cationic surfactants allow the composition to be applied to wood with a high moisture content. This fact makes it possible to apply it to timber in use, for example as a remedial treatment or as maintenance.

The composition of the present invention does not alter the conductivity of treated timber, consequently railway sleepers can be treated without negative impact on the electronic localisation of railway material.

### EXAMPLES

The following examples are provided to further describe certain embodiments of the invention, their preparation and application wood preserving system,

### Example 1

| | | |
|---|---|---|
| 20 | parts | Copper-octoate |
| 80 | parts | "test gasoline" |
| 100 | parts | |

The composition of Example 1 is not effective against Poria and Antrodia species and contains hydrocarbon solvent.

### Example 3

| | | |
|---|---|---|
| 90 | parts | Blend of Pine Oil Fatty Acid and Pine Oil |
| 5 | parts | Copper(II)hydroxide |
| 5 | parts | DDA-Acetate |
| 100 | parts | |

The composition of Example 3 has a broad spectrum of activity, has no hydrocarbon solvents, and is odorless.

### Example 4

| | | |
|---|---|---|
| 90 | parts | Blend of "Ricinus" Oil Fatty Acid and Ricinus Oil |
| 4 | parts | Copper(II)hydroxide |
| 5 | parts | DDA-Borate |
| 1 | part | Propiconzazol |
| 100 | parts | |

The composition of Example 4 has a broad spectrum of activity, low loading, and high resistance against mold.

### Example 5

| | | |
|---|---|---|
| 91 | parts | Blend of Pine Oil Fatty Acid and Pine Oil |
| 4 | parts | Copper(II)hydroxide |
| 4 | parts | N,N-Didecyl-N-methyl-N-poly(oxethyI)-ammoniumpropionate |
| 1 | part | Etofenprox |
| 100 | parts | |

The composition of Example 5 has the same advantages as example 3 with significantly higher efficacy against termites.

### Example 6

| | | |
|---|---|---|
| 90 | parts | Blend of Pine Oil Fatty Acid and Pine Oil |
| 4 | parts | Copper(II)hydroxide |
| 4 | parts | N,N-Didecyl-N-methyl-N-poly(oxethyl)-ammoniumpropionate |
| 1 | part | Colorant |
| 1 | part | Tebuconazol |
| 100 | parts | |

The composition of Example 6 is a colored system with increased efficacy against basidiomycetes.

### Example 7

| | | |
|---|---|---|
| 90 | parts | Blend of Pine Oil Fatty Acid and Pine Oil |
| 4 | parts | Copper(II)hydroxide |
| 4 | parts | N,N-Didecyl-N-methyl-N-poly(oxethyl)-ammoniumpropionate |
| 2 | parts | Special Wax |
| 100 | parts | |

The composition of Example 7 is a colored system with water repellency and protection against weathering.

### Example 9

| | | |
|---|---|---|
| 40 | parts | Blend of Linseed Oil Fatty Acid and Linseed Oil |
| 40 | parts | Blend of Pine Oil Fatty Acid and Pine Oil |
| 10 | parts | Olein |
| 4 | parts | Copper(II)hydroxide |
| 4 | parts | Benzalkoniumacetat |
| 100 | arts | |

The composition of Example 9 is a system with reduced viscosity and is highly diffusible.

### Example 10

| | | |
|---|---|---|
| 30 | parts | 2-ethylhexanoic acid |
| 60 | parts | Fatty Acid mixture C8-C20 techn. |
| 4 | parts | Copper(II)hydroxide |
| 4 | parts | Quat (borate) |
| 1 | part | antioxidant |
| 1 | part | Zirconium soap |
| 100 | parts | |

The composition of Example 10 is a system with improved weathering characteristics.

## Claims

1. A wood preservative composition comprising:
bivalent copper selected from the group consisting of cupric oxide and copper hydroxide and a fatty acid derived from tall oil, and an oil; and
an organic co-biocide selected from the group consisting of a quaternary ammonium compound, a triazole compound, a borate compound, and a fluoride compound,
wherein the fatty acid compound is selected from the group consisting of palmitic fatty acid, arachidic fatty acid, linoleic fatty acid, oleic fatty acid, and stearic fatty acid, and
the oil is selected from the group consisting of lard, butter, hemp oil, canola oil, sunflower oil, olive oil, corn oil, palm oil, coconut oil, pine oil, cottonseed oil, wheat germ oil, soya oil, safflower oil, linseed oil, tung oil, castor oil, soybean oil, peanut oil, rapeseed oil, sesame seed oil, rice germ oil, fish oil, whale oil and tall oil, aliphatic petroleum distillates, aromatic kerosene extracts, and mineral oil.

2. The composition of claim 1, further comprising a quaternary ammonium cation.

3. The composition of claim 1, wherein the weight ratio of the fatty acid is in the range of from 0.01 to 30 wt % of the composition.

4. The composition of claim 1, wherein the weight ratio of the ionized copper is in the range of from 0.01 to 30 wt % of the composition.

5. The composition of claim 1, wherein the weight ratio of the organic co-biocide is in the range of from 0.005-10 wt % of the composition.

6. The composition of claim 1, wherein the triazole compound is selected from the group consisting of tebuconazole, cyproconazole, propiconazole and triadimefon.

7. A method for producing the wood preservative composition of claim 1 comprising steps of:
i) combining said bivalent copper selected from the group consisting of cupric oxide and copper hydroxide, said fatty acid compound and said oil; and
ii) heating the combination of step i) until a portion of the bivalent copper is dissolved; and
iii) adding said organic co-biocide to the combination of step ii).

8. A method for treating wood comprising contacting the composition of claim 1 to wood, thereby rendering the wood resistant to one or more wood decay fungi, insects, or marine borers.

9. Wood resistant to wood decay fungi, insects and marine borers, comprising the composition of claim 1.

10. The wood preservative composition of claim 1 which has 0 wt. % of water.

## Patentansprüche

1. Holzschutzmittelzusammensetzung, umfassend:
bivalentes Kupfer, ausgewählt aus der Gruppe, bestehend aus Kupferoxid und Kupferhydroxid, und eine Fettsäure, die sich von Tallöl ableitet, und ein Öl; und
ein organisches Co-Biozid, ausgewählt aus der Gruppe, bestehend aus einer quartären Ammoniumverbindung, einer Triazolverbindung, einer Boratverbindung und einer Fluoridverbindung,
wobei die Fettsäurekomponente aus der Gruppe ausgewählt ist, bestehend aus Palmitinfettsäure, Arachinfettsäure, Linolfettsäure, Ölfettsäure und Stearinfettsäure, und
das Öl aus der Gruppe ausgewählt ist, bestehend aus Schmalz, Butter, Hanföl, Rapsöl, Sonnenblumenöl, Olivenöl, Maisöl, Palmöl, Kokosnussöl, Kiefernöl, Baumwollsamenöl, Weizenkeimöl, Sojaöl, Distelöl, Leinöl, Tungöl, Rizinusöl, Sojabohnenöl, Erdnussöl, Rapssamenöl, Sesamöl, Reiskeimöl, Fischöl, Walöl und Tallöl, aliphatischen Erdöldestillaten, aromatischen Kerosinextrakten und Mineralöl.

2. Zusammensetzung nach Anspruch 1, ferner umfassend ein quartäres Ammoniumkation.

3. Zusammensetzung nach Anspruch 1, wobei das Gewichtsverhältnis von der Fettsäure in dem Bereich von 0,01 bis 30 Gew.-% der Zusammensetzung liegt.

4. Zusammensetzung nach Anspruch 1, wobei das Gewichtsverhältnis von dem ionisierten Kupfer in dem Bereich von 0,01 bis 30 Gew.-% der Zusammensetzung liegt.

5. Zusammensetzung nach Anspruch 1, wobei das Gewichtsverhältnis des organischen Co-Biozids in dem Bereich von 0,005-10 Gew.-% der Zusammensetzung liegt.

6. Zusammensetzung nach Anspruch 1, wobei die Triazolverbindung aus der Gruppe ausgewählt ist, bestehend aus Tebuconazol, Cyproconazol, Propiconazol und Triadimefon.

7. Verfahren zum Herstellen der Holzschutzmittelzusammensetzung nach Anspruch 1, umfassend die folgenden Schritte:
i) Kombinieren von dem bivalenten Kupfer, ausgewählt aus der Gruppe, bestehend aus Kupferoxid und Kupferhydroxid, der Fettsäureverbindung und dem Öl; und
ii) Erwärmen von der Kombination aus dem Schritt i), bis ein Teil des bivalenten Kupfers gelöst ist; und
iii) Zugeben von dem organischen Co-Biozid zu der Kombination aus dem Schritt ii).

8. Verfahren zum Behandeln von Holz, umfassend das In-Kontakt-Bringen von der Zusammensetzung nach Anspruch 1 mit Holz, wobei das Holz beständig gegenüber einen oder mehreren Holzzersetzungspilzen, Insekten oder Bohrmuscheln gemacht wird.

9. Holz, beständig gegenüber Holzzersetzungspilzen, Insekten und Bohrmuscheln, umfassend die Zusammensetzung nach Anspruch 1.

10. Holzschutzmittelzusammensetzung nach Anspruch 1, die 0 Gew.-% Wasser aufweist.

## Revendications

1. Composition de conservation de bois comprenant :
du cuivre bivalent choisi dans le groupe constitué de l'oxyde cuprique et de l'hydroxyde de cuivre et un acide gras dérivé de l'huile de tall, et une huile ; et
un co-biocide organique choisi dans le groupe constitué d'un composé d'ammonium quaternaire, d'un composé de triazole, d'un composé de borate et d'un composé de fluorure,
dans laquelle le composé d'acide gras est choisi dans le groupe constitué de l'acide gras palmitique, de l'acide gras arachidique, de l'acide gras linoléique, de l'acide gras oléique et de l'acide gras stéarique, et
l'huile est choisie dans le groupe constitué du lard, du beurre, de l'huile de chanvre, de l'huile de canola, de l'huile de tournesol, de l'huile d'olive, de l'huile de maïs, de l'huile de palme, de l'huile de noix de coco, de l'huile de pin, de l'huile de graines de coton, de l'huile de germe de blé, de l'huile de soja, de l'huile de carthame, de l'huile de lin, de l'huile de bois de Chine, de l'huile de ricin, de l'huile de fèves de soja, de l'huile d'arachide, de l'huile de colza, de l'huile de graines de sésame, de l'huile de germe de riz, de l'huile de poisson, de l'huile de baleine et de l'huile de tall, des distillats de pétrole aliphatiques, des extraits de kérosène aromatiques, et d'une huile minérale.

2. Composition selon la revendication 1, comprenant en outre un cation d'ammonium quaternaire.

3. Composition selon la revendication 1, dans laquelle le rapport pondéral de l'acide gras est compris entre 0,01 et 30 % en poids de la composition.

4. Composition selon la revendication 1, dans laquelle le rapport pondéral du cuivre ionisé est compris entre 0,01 et 30 % en poids de la composition.

5. Composition selon la revendication 1, dans laquelle le rapport pondéral du co-biocide organique est compris entre 0,005 et 10 % en poids de la composition.

6. Composition selon la revendication 1, dans laquelle le composé de triazole est choisi dans le groupe constitué du tébuconazole, du cyproconazole, du propiconazole et du triadiméfon.

7. Procédé de production de la composition de conservation de bois selon la revendication 1 comprenant les étapes de :
i) combinaison dudit cuivre bivalent choisi dans le groupe constitué de l'oxyde cuprique et de l'hydroxyde de cuivre, dudit composé d'acide gras et de ladite huile ; et
ii) chauffage de la combinaison de l'étape i) jusqu'à ce qu'une partie du cuivre bivalent soit dissoute ; et
iii) ajout dudit co-biocide organique à la combinaison de l'étape ii).

8. Procédé de traitement de bois comprenant la mise en contact de la composition selon la revendication 1 avec un bois, rendant ainsi le bois résistant à un ou plusieurs champignons, insectes ou xylophages marins détériorant le bois.

9. Bois résistant aux champignons, insectes ou xylophages marins détériorant le bois, comprenant la composition selon la revendication 1.

10. Composition de conservation de bois selon la revendication 1 qui comporte 0 % en poids d'eau.
